# EUROPÄISCHE PATENTSCHRIFT

(11) **EP 1 136 728 B1**
(45) Veröffentlichungstag und Bekanntmachung des Hinweises auf die Patenterteilung: **30.06.2004**
(21) Anmeldenummer: 01104517.6
(22) Anmeldetag: 02.03.2001
(51) Int. Cl.: F16H 63/38

(54) **Stufenwechselgetriebe**
Step-change gearbox
Boite à changement de vitesses étagées

(30) Priorität: 24.03.2000 DE 10014880
(43) Veröffentlichungstag der Anmeldung: 26.09.2001
(73) Patentinhaber: Volkswagen Aktiengesellschaft, 38436 Wolfsburg (DE)
(72) Erfinder: Gruss, Roland, 38477 Jembke (DE)
(74) Vertreter: Lindner, Manfred Klaus, Dipl.-Phys.

(56) Entgegenhaltungen:
- WO-A-95/35456
- DE-C- 4 019 332
- GB-A- 1 319 374
- US-A- 5 979 262

## Beschreibung

Die Erfindung betrifft ein Stufenwechselgetriebe, insbesondere für ein Kraftfahrzeug, mit einer Schaltwelle, die zur getriebeinternen Übertragung von Wähl- und Schaltvorgängen mittels eines Lagerzapfens axialverschiebbar und um ihre Längsachse drehbar in der Bohrung einer Schaltwellenführung gelagert ist.

In Kraftfahrzeugen sind Stufenwechselgetriebe zur Anpassung der Übersetzung zwischen dem jeweiligen Antriebsmotor und einem zugeordneten Ausgleichsgetriebe bzw. den damit in Verbindung stehenden Antriebsrädern weit verbreitet, da sie relativ einfach aufgebaut sind und einen hohen Wirkungsgrad aufweisen. Stufenwechselgetriebe sind zumeist synchronisiert ausgebildet und können für eine manuelle oder eine automatisierte Schaltbetätigung vorgesehen sein. Die Anpassung an aktuelle Betriebsbedingungen, insbesondere auch eine Vermeidung unzulässiger Drehzahlen des Antriebsmotors, erfolgt durch die Schaltung eines geeigneten Ganges, dem jeweils ein festes Übersetzungsverhältnis zugeordnet ist. Hierzu wird bei einer manuellen Schaltung von einem Fahrer zunächst in einem Wählvorgang durch eine entsprechende Positionierung eines Handschalthebels in einer Schaltkonsole eine von mehreren Schaltgassen gewählt, denen jeweils zwei Gänge, ggf. auch nur ein Gang, zugeordnet sind. In einem nachfolgenden Schaltvorgang wird der Handschalthebel dann zum Einlegen des betreffenden Ganges in der zuvor gewählten Schaltgasse in die zugeordnete Gangposition bewegt. Die Wähl- und Schaltbewegungen werden über mechanische Umlenk- und Übertragungsbauteile zu dem Stufenwechselgetriebe übertragen und dort zumeist in eine Schaltwelle eingeleitet. Die Schaltwelle ist in dem Stufenwechselgetriebe axialverschiebbar und um ihre Längsachse drehbar gelagert. Ein Wählvorgang besteht getriebeintern darin, daß ein Schaltfinger der Schaltwelle mit einem Mitnehmer einer Schaltstange in Eingriff gebracht wird. Die Schaltstange weist eine permanent mit einer Schaltmuffe in Eingriff befindliche Schaltgabel auf, über die in einem Schaltvorgang durch eine Axialverschiebung der Schaltmuffe über eine vorgeschaltete Synchronisiervorrichtung der betreffende Gang durch ein Schließen einer zugeordneten Gangschaltkupplung eingelegt wird. Bei den meisten Stufenwechselgetrieben ist einem Wählvorgang eine Axialverschiebung der Schaltwelle und einem Schaltvorgang eine Drehung der Schaltwelle zugeordnet.

Aufgrund von Drehschwingungen und anderen Ungleichförmigkeiten eines als Verbrennungskraftmaschine ausgebildeten Antriebsmotors, der zumeist über eine Flanschverschraubung starr mit dem Stufenwechselgetriebe verbunden ist, kann die Schaltwelle in bestimmten Betriebszuständen zu Axialschwingungen angeregt werden. Derartige Schwingungen werden ohne spezielle Vorkehrungen über die Umlenk- und Übertragungsbauteile zu dem Handschalthebel übertragen. Neben einer Komforteinbuße durch einen vibrierenden Handschalthebel und damit verbundene Geräusche führen die Schwingungen auch zu einem vorzeitigen Verschleiß der entsprechenden Bauteile. Es gibt daher bekannte Maßnahmen, um Schwingungen des Handschalthebels und der Umlenkund Übertragungsbauteile zu vermeiden, wie z. B. die Verwendung von Lagerungen mit schwingungsdämpfenden Eigenschaften oder von Schwingungstilgern. Derartige Vorkehrungen sind jedoch sehr aufwendig und teuer.

Aus der DE 40 19 332 C1 ist eine Positioniervorrichtung für Schaltwellen von Stufenwechselgetrieben bekannt, bei der die Schaltwelle in einer Lagerbohrung von einem konzentrisch angeordneten und radial aufweitbaren Federglied umfasst wird, das an einander zugewandten Rändern Rasten aufweist und axial festgelegt ist. Die Schaltwelle ist mit einem radial hervorragenden Bolzen versehen, der sich mit den Rändern des Federgliedes in Eingriff befindet, wodurch eine axiale Positionierung der Schaltwelle gegeben ist. Durch die bekannte Anordnung wird auch eine Axialschwingung der Schaltwelle behindert bzw. gedämpft. Nachteilig ist jedoch, daß das Federglied bei einem Wechsel der Schaltgasse, d.h. bei einer Axialverschiebung der Schaltwelle von einer Raste zur anderen, aufgeweitet werden muß, was zu einer merklichen Erhöhung der Schaltkräfte am Handschalthebel führt.

Es ergibt sich daher das Problem, ein Stufenwechselgetriebe, das mit einer Schaltwelle zur getriebeinternen Übertragung von Wähl- und Schaltvorgängen versehen ist, mit einer einfachen und kostengünstigen Vorrichtung auszustatten, mittels der Axialschwingungen der Schaltwelle vermeidbar sind, ohne Wähl- und Schaltvorgänge durch eine Erhöhung der Schaltkräfte zu erschweren.

Das Problem wird erfindungsgemäß mit einem Schaltgetriebe nach Anspruch 1 oder Anspruch 2 gelöst, wobei z.B. ein in der Schaltwellenführung gelagertes und in dessen Bohrung hineinragendes Rastierelement vorgesehen ist und der Lagerzapfen der Schaltwelle eine axiale Ausnehmung und tangentiale Vertiefungen aufweist, die derart ausgebildet und angeordnet sind, daß sich das Rastierelement in einer Neutrallage der Schaltwelle mit der axialen Ausnehmung und in einer einer Schaltgasse entsprechenden Position mit der zugeordneten tangentialen Vertiefung in Eingriff befindet.

Während die Schaltwelle in ihrer Neutrallage, die der Position eines Handschalthebels in der Verbindungsgasse einer Schaltkonsole entspricht, zur Wahl einer Schaltgasse aufgrund der axialen Ausnehmung ungehemmt durch das Rastierelement axial verschiebbar ist, wird eine Axialbewegung der Schaltwelle in den jeweils einer Schaltgasse entsprechenden Positionen, insbesondere in den jeweils einem geschalteten Gang entsprechenden Positionen, durch den Eingriff des Rastierelementes in eine der tangentialen Vertiefungen form- und kraftschlüssig gehemmt und daher auch von einem Antriebsmotor angeregte Axialschwingungen der Schaltwelle gedämpft. Darüber hinaus sind die tangentialen Vertiefungen in Verbindung mit dem Rastierelement auch als Schaltwellenführung wirksam, durch die verhindert wird, daß ein durch Toleranzen und Passungsspiele der Bauteile der getriebeintemen Schaltübertragung bedingtes Querspiel über die Schaltwelle und die Bauteile der getriebeexternen Schaltübertragung auf den Handschalthebel übertragen wird. Es tritt keine Erhöhung der über den Handschalthebel einzugebenden Schaltkräfte auf. Die axiale Ausnehmung und die radialen Vertiefungen sind durch eine Fräs- und ggf. eine Drehbearbeitung des Lagerzapfens preiswert herstellbar. Als Rastierelement sind bekannte Bauteile, wie beispielsweise eine in einer radialen Bohrung unter der Belastung einer Schraubenfeder geführte Kugel, denkbar. Die Schwingungsdämpfung entsteht einerseits durch elastische Verformung, d.h. innere Reibung, des Rastierelementes selbst oder eines mit diesem in Verbindung stehenden Bauteiles, z. B. eines Federelementes, und andererseits durch äußere Reibung zwischen dem Rastierelement und der jeweiligen tangentialen Vertiefung des Lagerzapfens.

Die prinzipiell gleiche Funktionsweise ist auch gegeben, wenn umgekehrt das Rastierelement auf dem Lagerzapfen angeordnet ist und aus dessen Umfang hinausragt, und wenn sich die axiale Ausnehmung und die tangentialen Vertiefungen in der Bohrung der Schaltwellenführung befinden.

Alternativ zu bekannten Rastierelementen kann das Rastierelement einteilig ausgebildet sein und federelastische Eigenschaften aufweisen. Ein zusätzliches Federelement kann dann eingespart werden.

Als Material des Rastierelementes kommen sowohl ein Federstahl als auch ein federelastischer Kunststoff in Frage.

Es ist besonders vorteilhaft, wenn das Rastierelement als Federspange ausgebildet ist und die Schaltwellenführung zur Lagerung der Federspange mindestens eine Ausnehmung aufweist. Eine Federspange kann preiswert aus einem Federdraht hergestellt und in einfacher Weise durch ein Einstecken in die Ausnehmung der Schaltwellenführung montiert werden. Der Lagerzapfen muß dabei nicht zwingend auch als Lagerung dienen.

Bei einer weitgehend rechtwinkligen Anordnung zu der Längsachse der Schaltwelle ist die Federspange axial- und verdrehfest in der Schaltwellenführung gelagert.

In diesem Fall kann die jeweilige tangentiale Vertiefung in dem Lagerzapfen der Schaltwelle als Ringnut ausgebildet sein und ist damit preiswert durch eine Drehbearbeitung herstellbar. Form und Größe der Ringnut korrespondieren dann vorteilhaft mit den Abmessungen der Federspange, d.h. bei Verwendung einer aus Federdraht gefertigten Federspange haben die Ringnuten einen halbkreisförmigen Querschnitt mit einem geringfügig größeren Durchmesser, wodurch eine größtmögliche Reibkontaktfläche zwischen der Federspange und der jeweiligen tangentialen Vertiefung des Lagerzapfens gegeben ist.

Die axiale Ausnehmung kann als Abflachung des Umfanges des Lagerzapfens ausgebildet sein und ist damit preiswert durch eine Fräsbearbeitung herstellbar.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Figur 1:: eine Schaltwelle mit einer zugeordneten Schaltwellenführung in einer perspektivischen, teilweise aufgeschnittenen Darstellung, und
- Figur 2:: die Schaltwelle mit der zugeordneten Schaltwellenführung in einem Querschnitt II - II nach Fig. 1.

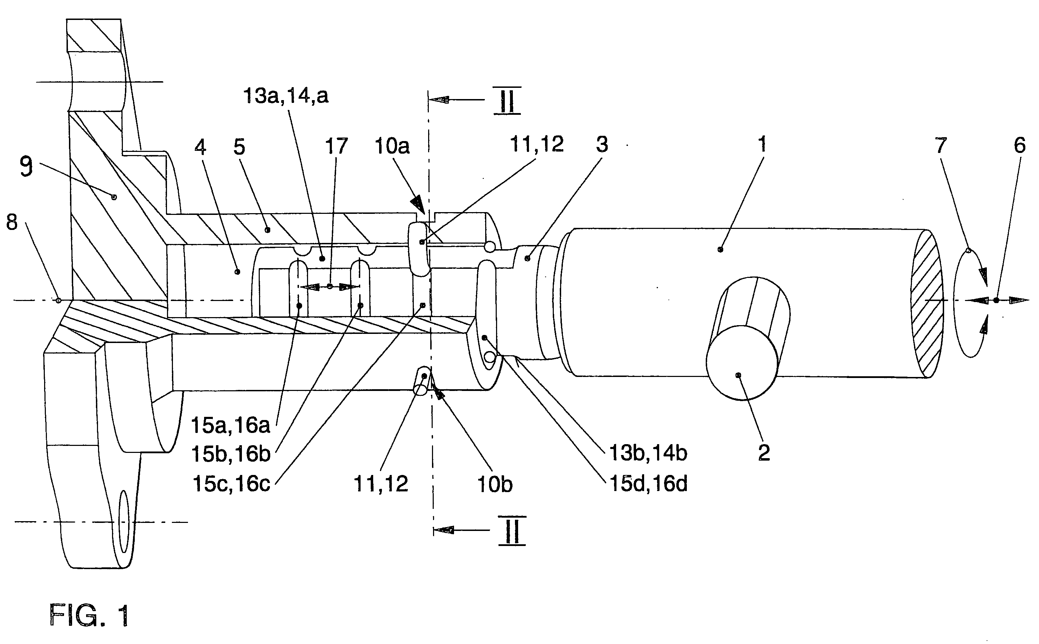

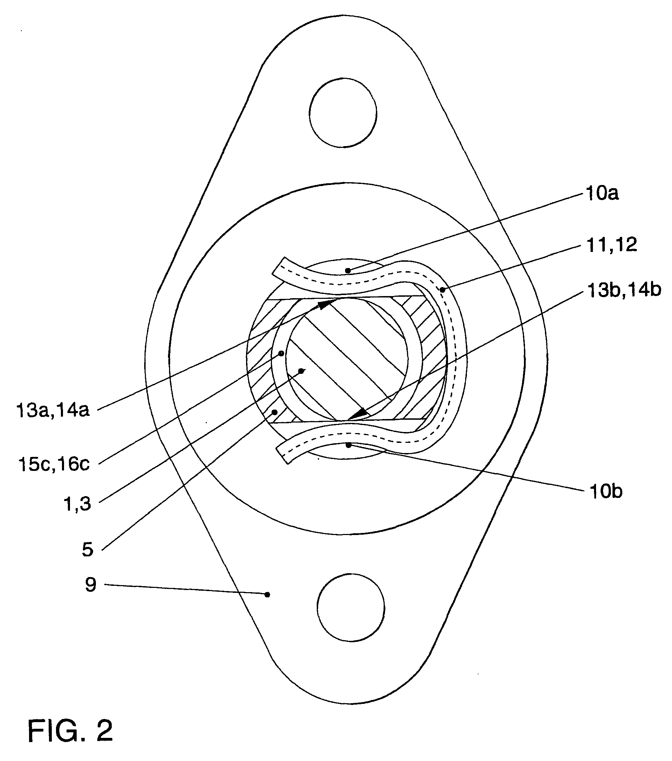

In der Figur 1 sind die für die Erfindung wesentlichen Bauteile eines Stufenwechselgetriebes in einer perspektivischen Ansicht dargestellt. In der Figur 2 sind dieselben Bauteile in einem vertikalen Schnitt II - II nach Fig. 1 abgebildet.

Es ist ein Teil einer Schaltwelle 1 sichtbar, die mit einem Schaltfinger 2 versehen ist und mit einem Lagerzapfen 3 in der Bohrung 4 einer Schaltwellenführung 5, wie durch einen Längsbewegungspfeil 6 angedeutet, axialverschiebbar und, wie durch einen Rotationspfeil 7 gekennzeichnet, um ihre Längsachse 8 drehbar gelagert ist. Die Schaltwellenführung 5 weist einen Befestigungsflansch 9 auf, der zur Verschraubung der Schaltwellenführung 5 mit einer Gehäusewand des Stufenwechselgetriebes vorgesehen ist. Die Schaltwellenführung 5 weist zwei tangential ausgerichtete Ausnehmungen 10a, 10b auf, in denen ein als Federspange 11 ausgebildetes und in die Bohrung 4 hineinragendes Rastierelement 12 gelagert ist. Der Lagerzapfen 3 ist mit zwei als Abflachung 13a, 13b des Umfanges ausgebildeten axialen Ausnehmungen 14a, 14b und mit vier als Ringnuten 15a bis 15d ausgebildeten tangentialen Vertiefungen 16a bis 16b versehen. Die Ringnuten 15a - 15b weisen jeweils einen axialen Abstand 17 voneinander auf, der jeweils einer Axialverschiebung 6 der Schaltwelle 1 bei einem Wechsel in eine benachbarte Schaltgasse entspricht.

Die Schaltwelle 1 befindet sich jeweils in einer der dritten Schaltgasse entsprechenden axialen Position und einer der Verbindungsgasse einer zugeordneten Schaltkonsole entsprechenden neutralen Rotationslage. Es ist deutlich erkennbar, daß die Schaltwelle 1 zur Durchführung von Wählvorgängen, d.h. dem Wechsel der Schaltgasse, ungehindert axial verschiebbar ist, da diese Bewegung aufgrund der axialen Ausnehmungen 14a, 14b durch die Federspange 11 nicht behindert wird. Dagegen wird die Federspange 11 bei einer Drehung der Schaltwelle 1, die dem Einlegen eines Ganges entspricht, mit der entsprechenden Ringnut 15a - 15d in Eingriff gebracht, wobei Form und Größe der Ringnuten 15a - 15d mit den Abmessungen der Federspange 11 korrespondieren. In einer derartigen, einem geschalteten Gang entsprechenden Position der Schaltwelle 1, die gegenüber der Darstellung in Fig. 1 und Fig. 2 einer Drehung 7 der Schaltwelle 1 um ca. 20° entspricht, ist die Federspange 11 leicht gespreizt und damit vorgespannt. Bei einer Axialbewegung 6 der Schaltwelle 1 wird die Federspange 11 an einen Rand der betreffenden Ringnut 15a - 15d gedrückt und damit radial geweitet, wodurch sich die federelastische Rückstellkraft der Federspange 11 erhöht. Die Axialbewegung 6 und somit auch eine Axialschwingung der Schaltwelle 1 wird somit im wesentlichen durch eine elastische Verformung, d.h. innere Reibung, des Rastierelementes 12, aber auch durch äußere Reibung zwischen dem Rastierelement 12 und der jeweiligen tangentialen Vertiefung 16a - 16b in dem Lagerzapfen 3 gedämpft.

Die erfindungsgemäße Vorrichtung zur Dämpfung von Axialschwingungen der Schaltwelle 1 ist besonders einfach aufgebaut und daher preiswert herstellbar. Durch die unmittelbare Schwingungsdämpfung an der Schaltwelle 1 selbst können schwingungsdämpfende Maßnahmen an anderen Bauteilen der getriebeinternen und -externen Schaltübertragung, wie beispielsweise die Verwendung von Lagerungen mit schwingungsdämpfenden Eigenschaften und von Schwingungstilgern, eingespart werden. Das Auftreten verschleißfördernder und komfortmindernder Schwingungen und der damit verbundenen Geräusche in Bauteilen des Stufenwechselgetriebes und der Schaltübertragung einschließlich des Handschalthebels ist somit mit einfachen und kostengünstigen Mitteln verhindert.

### BEZUGSZEICHENLISTE

- 1: Schaltwelle
- 2: Schaltfinger
- 3: Lagerzapfen
- 4: Bohrung
- 5: Schaltwellenführung
- 6: Längsbewegungspfeil, Axialverschiebung, Axialbewegung
- 7: Rotationspfeil, Drehung
- 8: Längsachse (der Schaltwelle)
- 9: Befestigungsflansch
- 10a: Ausnehmung (der Schaltwellenführung)
- 10b: Ausnehmung (der Schaltwellenführung)
- 11: Federspange
- 12: Rastierelement
- 13a: Abflachung (des Lagerzapfens)
- 13b: Abflachung (des Lagerzapfens)
- 14a: axiale Ausnehmung (des Lagerzapfens)
- 14b: axiale Ausnehmung (des Lagerzapfens)
- 15a: Ringnut (des Lagerzapfens)
- 15b: Ringnut (des Lagerzapfens)
- 15c: Ringnut (des Lagerzapfens)
- 15d: Ringnut (des Lagerzapfens)
- 16a: tangentiale Vertiefung (des Lagerzapfens)
- 16b: tangentiale Vertiefung (des Lagerzapfens)
- 16c: tangentiale Vertiefung (des Lagerzapfens)
- 16d: tangentiale Vertiefung (des Lagerzapfens)
- 17: axialer Abstand

## Patentansprüche

1. Stufenwechselgetriebe, insbesondere für ein Kraftfahrzeug, mit einer Schaltwelle (1), die zur getriebeinternen Übertragung von Wähl- und Schaltvorgängen in dem Stufenwechselgetriebe mittels eines Lagerzapfens (3) axialverschiebbar und um ihre Längsachse (8) drehbar in einer Bohrung (4) einer Schaltwellenführung (5) gelagert ist, **dadurch gekennzeichnet,**
- **daß** ein in der Schaltwellenführung (5) gelagertes und in die Bohrung (4) hineinragendes Rastierelement (12) vorgesehen ist, und
- **daß** der Lagerzapfen (3) eine axiale Ausnehmung (14a oder 14b) und tangentiale Vertiefungen (16a - 16d) aufweist, die derart ausgebildet und angeordnet sind, daß sich das Rastierelement (12)
- in einer Neutrallage der Schaltwelle (1) mit der axialen Ausnehmung und
- in einer einer Schaltgasse entsprechenden Position mit einer zugeordneten tangentialen Vertiefung (16a oder 16b oder 16c oder 16d) der tangentialen Vertiefungen in Eingriff befindet.

2. Stufenwechselgetriebe, insbesondere für ein Kraftfahrzeug, mit einer Schaltwelle (1), die zur getriebeinternen Übertragung von Wähl- und Schaltvorgängen in dem Stufenwechselgetriebe mittels eines Lagerzapfens (3) axialverschiebbar und um ihre Längsachse (8) drehbar in einer Bohrung (4) einer Schaltwellenführung (5) gelagert ist, **dadurch gekennzeichnet,**
- **daß** ein Rastierelement (12) auf dem Lagerzapfen (3) angeordnet ist und aus dessen Umfang hinausragt, und
- **daß** sich in der Bohrung der Schaltwellenführung (5) eine axiale Ausnehmung (14a oder 14b) und tangentiale Vertiefungen (16a - 16d) befinden, die derart ausgebildet und angeordnet sind, daß sich das Rastierelement (12)
- in einer Neutrallage der Schaltwelle (1) mit der axialen Ausnehmung und
- in einer einer Schaltgasse entsprechenden Position mit einer zugeordneten tangentialen Vertiefung (16a oder 16b oder 16c oder 16d) der tangentialen Vertiefungen in Eingriff befindet.

3. Stufenwechselgetriebe nach Anspruch 1 oder 2, **dadurch gekennzeichnet, daß** das Rastierelement (12) einteilig ausgebildet ist und federelastische Eigenschaften aufweist.

4. Stufenwechselgetriebe nach Anspruch 3, **dadurch gekennzeichnet, daß** als Material des Rastierelementes (12) Federstahl vorgesehen ist.

5. Stufenwechselgetriebe nach Anspruch 3, **dadurch gekennzeichnet, daß** als Material des Rastierelementes (12) ein federelastischer Kunststoff vorgesehen ist.

6. Stufenwechselgetriebe nach einem der Ansprüche 1 oder 3 bis 5, **dadurch gekennzeichnet, daß** das Rastierelement (12) als Federspange (11) ausgebildet ist, und daß die Schaltwellenführung (5) zur Lagerung der Federspange (11) mindestens eine Ausnehmung (10a, 10b) aufweist.

7. Stufenwechselgetriebe nach einem der Ansprüche 1 oder 3 bis 5, **dadurch gekennzeichnet,**
- **daß** das Rastierelement (12) als Federspange (11) ausgebildet ist,
- **daß** das Rastierelement (12) als Federspange (11) ausgebildet ist,
- **daß** die Schaltwellenführung (5) zur Lagerung der Federspange (11) zwei Ausnehmungen (10a und 10b) aufweist, und
- **daß** der Lagerzapfen (3) eine weitere axiale Ausnehmung (14b) aufweist, die der einen axialen Ausnehmung (14a) gegenüberliegt, wobei in der Neutrallage die axialen Ausnehmungen (14a und 14b) mit der Federspange (11) in Eingriff stehen.

8. Stufenwechselgetriebe nach Anspruch 4 und Anspruch 6 oder 7, **dadurch gekennzeichnet, daß** das Rastierelement (12) aus einem Federdraht hergestellt ist.

9. Stufenwechselgetriebe nach Anspruch 6, 7 oder 8, **dadurch gekennzeichnet, daß** die Federspange (11) weitgehend rechtwinkelig zu der Längsachse (8) der Schaltwelle (1) angeordnet ist.

10. Stufenwechselgetriebe nach Anspruch 1 und 9, **dadurch gekennzeichnet, daß** die jeweilige tangentiale Vertiefung (16a - 16d) in dem Lagerzapfen (3) der Schaltwelle (1) als Ringnut (15a - 15d) ausgebildet ist, und daß Form und Größe der Ringnut (15a - 15d) mit den Abmessungen der Federspange (11) korrespondieren.

11. Stufenwechselgetriebe nach einem der Ansprüche 1 oder 3 bis 10, **dadurch gekennzeichnet, daß** die axiale Ausnehmung (14a oder 14b) bzw. axialen Ausnehmungen (14a und 14b) als Abflachung (13a oder 13b) bzw. Abflachungen (13a und 13b) des Umfanges des Lagerzapfens (3) ausgebildet ist/sind.

## Claims

1. Step-by-step variable gear box, in particular for a motor vehicle, having a gearshift shaft (1) which is mounted in a drilled hole (4) in a gearshift shaft guide (5) so as to be axially displaceable in order to transmit, within the gear box, selecting and gearshifting processes in the step-by-step variable gear box by means of a bearing pin (3), and so as to be rotatable about its longitudinal axis (8), **characterized**
- **in that** a latching element (12) which is mounted in the gearshift shaft guide (5) and projects into the drilled hole (4) is provided, and
- **in that** the bearing pin (3) has an axial recess (14a or 14b) and has tangential depressions (16a - 16d) which are embodied and arranged in such a way that the latching element (12)
-- engages with the axial recess in a neutral position of the gearshift shaft (1), and
-- with an assigned tangential depression (16a or 16b or 16c or 16d) of the tangential depressions in a position which corresponds to a gearshift slot.

2. Step-by-step variable gear box, in particular for a motor vehicle, having a gearshift shaft (1) which is mounted in a drilled hole (4) in a gearshift shaft guide (5) so as to be axially displaceable in order to transmit, within the gear box, selecting and gearshifting processes in the step-by-step variable gear box by means of a bearing pin (3), and so as to be rotatable about its longitudinal axis (8),
**characterized**
- **in that** a latching element (12) is arranged on the bearing pin (3) and projects out of its circumference, and
- **in that** an axial recess (14a or 14b) and tangential depressions (16a - 16d) are located in the drilled hole in the gearshift shaft guide (5) and are embodied and arranged in such a way that the latching element (12)
-- engages with the axial recess in a neutral position of the gearshift shaft (1), and
-- with an assigned tangential depression (16a or 16b or 16c or 16d) of the tangential depressions in a position which corresponds to a gearshift slot.

3. Step-by-step variable gear box according to Claim 1 or 2, **characterized in that** the latching element (12) is embodied in one piece and has spring-elastic properties.

4. Step-by-step variable gear box according to Claim 3, **characterized in that** spring steel is provided as the material of the latching element (12).

5. Step-by-step variable gear box according to Claim 3, **characterized in that** a spring-elastic plastic is provided as the material of the latching element (12).

6. Step-by-step variable gear box according to one of Claims 1 or 3 to 5, **characterized in that** the latching element (12) is embodied as a spring clasp (11), and **in that** the gearshift shaft guide (5) has at least one recess (10a, 10b) for mounting the spring clasp (11).

7. Step-by-step variable gear box according to one of Claims 1 or 3 to 5, **characterized**
- **in that** the latching element (12) is embodied as a spring clasp (11),
- **in that** the gearshift shaft guide (5) has two recesses (10a and 10b) for mounting the spring clasp (11), and
- **in that** the bearing pin (3) has a further axial recess (14b) which lies opposite the one axial recess (14a), the axial recesses (14a and 14b) engaging with the spring clasp (11) in the neutral position.

8. Step-by-step variable gear box according to Claim 4 and Claim 6 or 7, **characterized in that** the latching element (12) is manufactured from a spring wire.

9. Step-by-step variable gear box according to Claim 6, 7 or 8, **characterized in that** the spring clasp (11) is arranged largely at right angles to the longitudinal axis (8) of the gearshift shaft (1).

10. Step-by-step variable gear box according to Claims 1 and 9, **characterized in that** the respective tangential depression (16a - 16d) in the bearing pin (3) of the gearshift shaft (1) is formed as an annular groove (15a - 15d), and **in that** the shape and size of the annular groove (15a - 15d) correspond to the dimensions of the spring clasp (11).

11. Step-by-step variable gear box according to one of Claims 1 or 3 to 10, **characterized in that** the axial recess (14a or 14b) or axial recesses (14a and 14b) is/are embodied as a flattened portion (13a or 13b) or flattened portions (13a and 13b) of the circumference of the bearing pin (3).

## Revendications

1. Boîte à changement de vitesse étagé, notamment pour un véhicule automobile, comprenant un axe de changement de vitesse (1) qui, pour la transmission interne à la boîte de vitesse des opérations de sélection et de changement de vitesse, est logé dans un orifice (4) d'un guide d'axe de changement de vitesse (5) de manière à pouvoir coulisser dans le sens axial dans la boîte à changement de vitesse étagé au moyen d'un tourillon (3) et de manière à pouvoir tourner autour de son axe longitudinal (8), **caractérisée en ce**
**qu'**il est prévu un élément d'enclenchement (12) logé dans le guide d'axe de changement de vitesse (5) et qui fait saillie dans l'orifice (4), et
**que** le tourillon (3) présente un creux axial (14a ou 14b) et des enfoncements tangentiels (16a - 16d) qui sont configurés et disposés de telle manière que l'élément d'enclenchement (12)
- se trouve en prise avec le creux axial dans une position neutre de l'axe de changement de vitesse (1) et,
- dans une position correspondant à une voie de changement de vitesse, se trouve en prise avec un enfoncement tangentiel associé (16a ou 16b ou 16c ou 16d) parmi les enfoncements tangentiels.

2. Boîte à changement de vitesse étagé, notamment pour un véhicule automobile, comprenant un axe de changement de vitesse (1) qui, pour la transmission interne à la boîte de vitesse des opérations de sélection et de changement de vitesse, est logé dans un orifice (4) d'un guide d'axe de changement de vitesse (5) de manière à pouvoir coulisser dans le sens axial dans la boîte à changement de vitesse étagé au moyen d'un tourillon (3) et de manière à pouvoir tourner autour de son axe longitudinal (8), **caractérisée en ce**
**qu'**un élément d'enclenchement (12) est disposé sur le tourillon (3) et fait saillie sur son pourtour, qu'un creux axial (14a ou 14b) et des enfoncements tangentiels (16a - 16d) se trouvent dans l'orifice du guide de l'axe de changement de vitesse (5), lesquels sont configurés et disposés de telle manière que l'élément d'enclenchement (12)
- se trouve en prise avec le creux axial dans une position neutre de l'axe de changement de vitesse (1) et,
- dans une position correspondant à une voie de changement de vitesse, se trouve en prise avec un enfoncement tangentiel associé (16a ou 16b ou 16c ou 16d) parmi les enfoncements tangentiels.

3. Boîte à changement de vitesse étagé selon la revendication 1 ou 2, **caractérisée en ce que** l'élément d'enclenchement (12) est formé d'une seule pièce et présente des propriétés déformables.

4. Boîte à changement de vitesse étagé selon la revendication 3, **caractérisée en ce que** le matériau choisi pour l'élément d'enclenchement (12) est de l'acier à ressort.

5. Boîte à changement de vitesse étagé selon la revendication 3, **caractérisée en ce que** le matériau choisi pour l'élément d'enclenchement (12) est une matière plastique déformable.

6. Boîte à changement de vitesse étagé selon l'une des revendications 1 ou 3 à 5, **caractérisée en ce que** l'élément d'enclenchement (12) est réalisé sous la forme d'une boucle élastique (11) et que le guide d'axe de changement de vitesse (5) présente au moins un creux (10a, 10b) pour recevoir la boucle élastique (11).

7. Boîte à changement de vitesse étagé selon l'une des revendications 1 ou 3 à 5, **caractérisée en ce**
- **que** l'élément d'enclenchement (12) est réalisé sous la forme d'une boucle élastique (11),
- **que** le guide d'axe de changement de vitesse (5) présente deux creux (10a et 10b) pour recevoir la boucle élastique (11), et
- **que** le tourillon (3) présente un autre creux axial (14b) qui est à l'opposé du creux axial (14a), les creux axiaux (14a et 14b) se trouvant en prise avec la boucle élastique (11) en position de point mort.

8. Boîte à changement de vitesse étage selon la revendication 4 et la revendication 6 ou 7, **caractérisée en ce que** l'élément d'enclenchement (12) est fabriqué en fil à ressort.

9. Boîte à changement de vitesse étagé selon la revendication 6, 7 ou 8, **caractérisée en ce que** la boucle élastique (11) est disposée pour l'essentiel en angle droit par rapport à l'axe longitudinal (8) de l'axe de changement de vitesse (1).

10. Boîte à changement de vitesse étagé selon la revendication 1 à 9, **caractérisée en ce que** l'enfoncement tangentiel (16a - 16d) dans le tourillon (3) de l'axe de changement de vitesse (1) est à chaque fois réalisé sous la forme d'une rainure annulaire (15a-15d) et que la forme et la taille de la rainure annulaire (15a-15d) correspondent aux dimensions de la boucle élastique (11).

11. Boîte à changement de vitesse étagé selon l'une des revendications 1 ou 3 à 10, **caractérisée en ce que** le creux axial (14a ou 14b) ou les creux axiaux (14a et 14b) est/sont réalisé(s) sous la forme d'un méplat (13a ou 13b) ou de méplats (13a et 13b) du pourtour du tourillon (3).
